# EUROPEAN PATENT SPECIFICATION

(11) **EP 1 508 361 B1**
(45) Date of publication and mention of the grant of the patent: **18.02.2009**
(21) Application number: 03077625.6
(22) Date of filing: 22.08.2003
(51) Int. Cl.: B01D 61/06, F01B 3/00, F04B 9/117

(54) **A reverse osmosis system with a pressure exchanger**
Umkehrosmose Entsalzungssystem mit einem Druckumwandler
Systéme d' osmose inversible avec un echangeur de pression

(43) Date of publication of application: 23.02.2005
(73) Proprietor: Danfoss A/S, 6430 Nordborg (DK)
(72) Inventor: Olsen, Palle, 6430 Nordborg (DK); Valbjorn, Anders, 6430 Nordborg (DK)
(74) Representative: Inspicos A/S

(56) References cited:
- US-A- 3 405 641
- US-A- 3 431 747
- US-A- 4 174 925
- US-A- 4 637 783

## Description

### Introduction

The present invention relates to a reverse osmosis desalination system comprising a desalination chamber with an RO membrane, an outlet leading a first fluid out of the chamber, an intake leading a second fluid into the chamber, and a pressure exchanger for transforming a pressure plof the first fluid to a pressure p2 of the second fluid,
wherein p2 is a pressure which is higher than p1 and which is sufficient for the reverse osmosis process.

### Background of the invention

In general, pressure exchangers are widely used for recovering pressure of a fluid for pressurising another fluid, e.g. in order to save energy in chemical process plants. In desalination plants working in accordance with the principles of reverse osmosis for production of fresh water on the basis of seawater, seawater is pressurised to approximately 60-70 bar depending upon the salt concentration. At this pressure, the seawater enters a process chamber having a wall, a so called RO membrane, which is permeable to pure water. Since the utilization rate is typically 25-35%, 65-75% of the added seawater is returned to the sea. In the returned water, the salt concentration is higher than the salt concentration in the seawater which enters the chamber. The returned seawater is normally referred to as "brine". During returning of the brine, it undergoes a pressure drop of 60-70 bar and the energy thereby released corresponds to 65-75 percent of the energy which has been consumed by a high pressure pump during the raising of the seawater pressure from the ambient pressure to the 60-70 bar process pressure of the RO plant. In order to recover the energy which is released during the returning of the seawater, a pressure exchanger can be inserted across the inlet and outlet of the process chamber. A pressure exchanger is capable of transferring the high pressure of the water which is returned to the sea, to the seawater which is being brought to a pressure in the range of 60-70 bar for entering the process chamber.

The pressure exchanger disclosed in US 3,431,747 has a rotating drum with axially extending bore holes. In the bore holes, the high pressure of a first fluid, e.g. the returned brine, is utilised for driving a second fluid, e.g. the entering seawater out of the bore holes at a high pressure. Accordingly, the pressure of the first fluid is transferred to the second fluid. Due to the rotation of the drum, bore holes are repeatedly filled with the second fluid which, subsequently, at a relatively high pressure, is driven out of the bore holes via the first fluid. The rotational speed is adjusted in accordance with the time it takes to fill and empty a bore hole so that open ends of the bore hole are in fluid communication with inlets and outlets for so long time which is required for filling and emptying the bore holes. In the disclosed converter, the first fluid and the second fluid is separated in the bore holes by a spherical ball. In US 6,540,487, a pressure exchanger of a similar design is disclosed without the spherical ball. In US 6,540,487, the first fluid drives the second fluid out of the axially extending holes by direct contact between the fluids, and in that case partly mixing of the fluids in a contact zone must be expected.

US 3,405,641 discloses a fluid operated axial plunger pump comprising cylinders with pistons movably arranged to displace a fluid out through outlets of a pump head under influence of the pressure of a fluid which arrives through an inlet of an axially opposite pump head.

US 4,174,925 discloses an apparatus for exchanging pressure energy and comprising a rotor which has a plurality of spaced tubes.

Common for most of the existing pressure exchangers is that the second fluid is pressurised to a pressure which is lower than the pressure of the first fluid. Due to the loss of pressure over the RO membrane and over the pressure exchanger, the converted second fluid will have a lower pressure than required for the reverse osmosis process. Even in pressure exchangers with relatively good efficiency, at most 98% of the pressure can be transferred whereas the remaining 2% counts as loss in the converter. Accordingly, the pressure difference between the required process pressure of the entering water, e.g. 60-70 bar, and the pressure which is obtainable via the pressure exchanger and the pressure of the returned water must be compensated via a booster pump driven by an external source of energy. The booster pump must be capable of raising the entering water e.g. from 55-60 bar to the 60-70 bar required for the process.

As previously mentioned, the utilization rate in desalination plants is typically 25-35%. In other words, 25-35% of the added seawater permeates through the RO membrane as desalinated pure water. Irrespective of the good performance of the existing pressure exchangers enabling almost complete transfer of the pressure of the brine to the entering seawater, a regular feed pump capable of raising the seawater from atmospheric pressure to the process pressure (60-70 bar) for the compensation of the 25-35% of the seawater which have been desalinated in a previous cycle and which is therefore not returned with the brine, must always be inserted in addition to the booster pump. Since the feed pump must raise the pressure from a start level different from the start level of the booster pump, namely from atmospheric pressure in contrary to e.g. 55-60 bar, the booster pump and the feed pump must be two separate pumping units. Evidently, this complicates the setup of RO desalination plants.

In US 4,637,783 a motor-pumping apparatus for recovery of energy from spent brine discharged from a reverse osmosis desalination system is capable of providing an increased pressure of the pumped liquid relative to the pressure of the operating liquid, i.e. the somewhat lower pressure of the used brine is converted into the somewhat higher pressure which is required for the reverse osmosis process. The disclosed motor-pumping apparatus, however, is relatively complicated and inefficient.

The inefficiency of the motor-pumping apparatus must be compensated by a relatively large volumetric capacity of the feed pump.

### Description of the invention

It is an object of a preferred embodiment of the present invention to provide a Reverse Osmosis (RO) desalination system without the above mentioned disadvantages. Accordingly, the present invention provides a system of the kind mentioned in the introduction, wherein said pressure exchanger comprises:
- a housing comprising a first set of apertures comprising at least one intake and at least one outlet aperture for intake and outlet of the first fluid and a second set of apertures comprising at least one intake and at least one outlet aperture for intake and outlet of the second fluid,
- a channel unit arranged in the housing, the unit comprising at least one channel extending from a first open end of the unit to an opposite, second, open end of the unit, said open ends of the channel and the apertures of the housing are provided for alternating:

- simultaneous fluid communication between the first open end and the intake aperture of the first set of apertures and fluid communication between the second open end and the outlet aperture of the second set of apertures, and thereafter
- simultaneous fluid communication between the first open end and the outlet aperture of the first set of apertures and fluid communication between the second open end and the intake aperture of the second set of apertures
for communication of the first and second fluids into and out of the channel during rotation of the unit relative to the first and second sets of apertures, and
- a sliding member movably arranged in the channel between the first open end and the second open end, the member comprising a first surface area of at least one surface in contact with the first fluid and a second surface area of at least one surface in contact with the second fluid, the first and second surface areas being of different size,
wherein the channel comprises first part with a first cross-sectional area in fluid communication with the high pressure fluid and a second part with a second cross-sectional area in fluid communication with the low pressure fluid, the first cross-sectional area being larger than the second cross-sectional area.

The following definitions may apply:
- First fluid is high pressure brine from membrane and low pressure brine to be drained, and
- second fluid is high pressure seawater to membrane and low pressure seawater from a feed pump.

Due to the difference in the areas of the surfaces, the sliding member can act as a piston which presses the second fluid out of the channel under influence of the pressure of the first fluid with a scaled pressure corresponding to the scale of the first surface area to the second surface area. Accordingly, the pressure of e.g. the first fluid may be transferred to the second fluid which arrives at a pressure depending upon the pressure of the first fluid and the scale between the areas of the surfaces.

The invention is thus applicable in combination with an RO desalination system wherein seawater is returned to the sea at a relatively high pressure. The pressure of the returned seawater, e.g. 50-60 bar, is converted to a pressure of the entering seawater which is sufficient for the RO process and which therefore requires no additional pressure rise and therefore requires no booster pump. The resulting reduction of the total amount of entering seawater which can be pressurized by a fixed amount of the returned seawater can be compensated for by the feed pump which anyway must be inserted for compensation of the desalinated seawater (the 25-35%). Accordingly, the invention enables simplification of the plant facilities leading to reduced desalination costs in RO plants.

The housing could have any outer shape, e.g. the shape of a drum, e.g. a tubular drum with a circular cross- sectional shape and with an inner cavity with a circular cross sectional shape for housing the channel unit. The apertures of the first and second sets of apertures forms through-holes into and out of the housing for communication of fluids between the channel(s) of the channel unit housed in the housing and plant facilities outside the housing. The apertures of the first set of apertures could be made in one end face whereas the apertures of the second set of apertures could be made in the axially opposite end face of the housing. The apertures may be formed as circular bore holes or the apertures may be made as oval holes or slits e.g. forming sections of a circle. The length of the sections could be fitted to match viscosities and pressures of the fluids so as to ensure that the open ends of the channel is in communication with the apertures for a time period sufficient for the fluids to enter and leave the channel during relative movement between the unit and the first and second sets of apertures.

The channel unit could have any outer shape, e.g. the shape of a drum, e.g. a tubular drum with a circular cross-sectional shape and two axially disposed end faces. If the channel unit has a tubular shape, the channel(s) could extend axially in the channel unit, preferably eccentrically so that rotation of the tubular drum around a centre axis causes the channel(s) to move along a circular path around the centre axis and thus causes the openings of the channel(s) to move in relation to the apertures of the first and second sets of apertures. The channel unit may be formed with axles extending axially in opposite directions for suspension of the unit for rotation around its centre axis. Moreover, the outer peripheral surface of the channel unit and/or the inner surface of the housing may be coated with a low frictional material in order to reduce friction between the channel unit and the inner surface of the housing during movement of the channel unit in relation to the housing. Carbon, DLC, PTFE, PEEK and any composition thereof are examples of low frictional materials which could be selected. For further details about coating with low frictional material, reference is made to applicants previously filed European patent applications, cf. European patent specification No. 0 679 225 and No 0 679 226.

The first and second surface areas could be areas of axially disposed opposite end faces of a piston. The end faces could form a uniform smooth surface or the end faces could have any shape and comprise steps and recesses. The end faces could even be distributed between numbers of distinct components. In that case, the surface area is the sum of the areas of the components which are influenced by the pressures. Such distinct components could move independently in the channel or they could move connected as one piston unit in the channel.

In a RO desalination system, it is typically desired to raise the pressure p1, being the pressure of the brine to a pressure p2, being the pressure of the seawater entering the process chamber. Accordingly, the area of the surface which is influenced by the brine may be larger than the area of the surface which is influenced by the seawater.

A particular good performance with easy reallocation of the channel-ends in fluid communication with the apertures of the housing can be achieved with a revolving channel unit, e.g. a rotating drum with eccentrically, axially extending channels, the drum being supported for rotation inside the housing. Accordingly, cyclically fluid communication between:
- the first open end and the intake aperture of the first set of apertures during a first period of time, and
- between the second open end and the outlet aperture of the second set of apertures during a second period of time, and thereafter
- between the first open end and the outlet aperture of the first set of apertures during a third period of time, and
- between the second open end and the intake aperture of the second set of apertures during a fourth period of time
during a cycle time corresponding to a 360° rotation of the channel unit, can be achieved. The rotation of the drum may be caused by a motor, e.g. an electric or hydraulic motor coupled to a drive shaft of the drum. The drive shaft may extend trough an opening in the housing via a liquid tight bearing.

In order to facilitate easy assembling and disassembling of the pressure exchanger, the first and second sets of apertures may be formed in first and second end portions at opposite axially disposed ends of a cylindrical body portion. The end portions could e.g. be end plates which are fastened to the body portion via bolts or rivets. The channel unit can be suspended in the housing via rotational bearings fastened to the end plates. The channel unit can be suspended in any direction, e.g. with its axis of rotation in parallel to a longitudinal axis of the channel and e.g. with the channel(s) extending either parallel to the axis of rotation or in any direction from parallel to radial to the axis of rotation.

The sliding member could be a piston which extends from the first part into the second part with an overlap between the two parts which overlap coextends the maximal possible stroke of the piston within the channel. The channel and the sliding member could have any cross-sectional shapes, e.g. an oval shape, a rectangular cross sectional shape etc. However, in one embodiment, the cross-sectional shapes of the channel and the sliding member are circular.

The sliding member could comprise a plurality of separate piston parts. This is an advantage, e.g. in combination with the above described channel having a first and a second channel part. One piston part could move in one of the channel parts whereas another piston part could move in the other channel part. Thereby it is achieved that the two channel parts not necessarily need to be completely coaxially arranged and the manufacturing is thereby easier.

In order to reduce noise from a pressure exchanger in operation, the channels and the openings of the first and second sets of apertures may be mutually offset to ensure that communication between an inlet and outlet opening of opposite sets of apertures is not in 100% overlapping communication with corresponding ends of the channels. For each rotation of the channel unit, the first period of time preferably overlaps the second period of time with. Correspondingly, for each rotation of the channel unit, the third period of time preferably overlaps the fourth period of time with 70-99 pct of the cycle time, e.g. 80-98% or 85-97% pct of the cycle time.

### Detailed description of the invention

In the following a preferred embodiment of the invention will be described in further details with reference to the drawings in which:
Fig. 1 shows a cross-sectional view of a pressure exchanger according to the present invention,
Fig. 2 shows a channel unit in the form of a rotor for rotation within a housing,
Fig. 3 shows a cross-sectional view of a piston for a pressure exchanger,
Fig. 4 shows a diagram of a setup with a prior art pressure exchanger,
Fig. 5 shows a diagram of a setup with a pressure exchanger with a piston having an area influenced by the first fluid and an area influenced by the second fluid, and
Fig. 6 shows a side-view of a valve plate for a pressure exchanger.

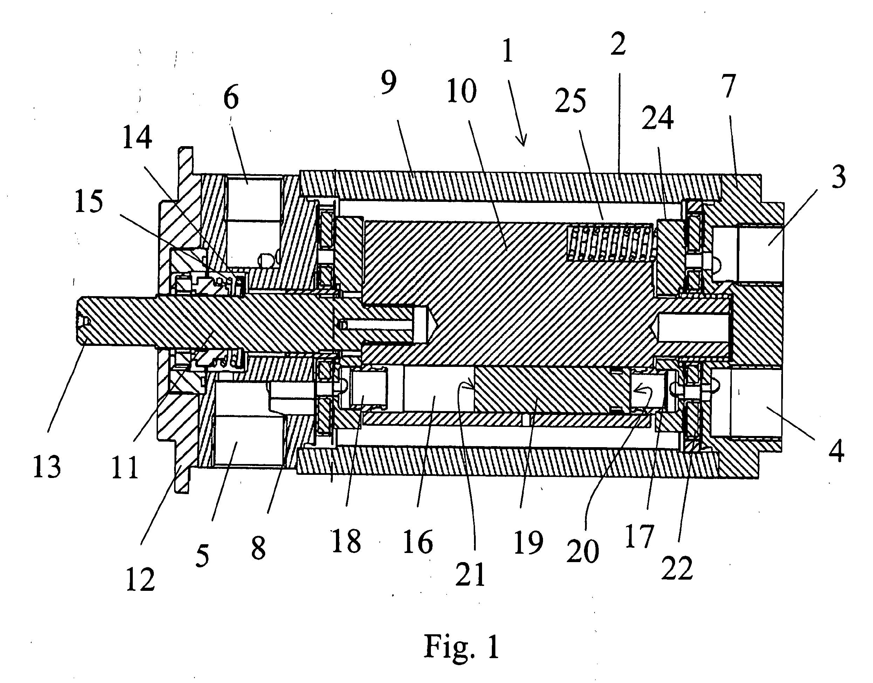

In Fig. 1, the pressure exchanger 1 is shown in a cross sectional view. The housing 2 comprises a first set of apertures comprising an intake aperture 3 and an outlet aperture 4 for intake and outlet of a first fluid, e.g. brine from a RO desalination plant. The housing further comprises a second set of apertures comprising an intake aperture 5 and an outlet aperture 6 for intake and outlet of a second fluid, e.g. seawater to be pressurised prior to entering a process chamber of a RO plant. The first and second sets of apertures are made in first and second plates 7, 8 defining first and second end portions at opposite ends of a body portion 9. The housing houses a channel unit in the form of a drum 10 suspended in two axially disposed axles 11. One of the axles extends though the first plate 7 and further through the flange 12. The free end 13 of the axle can be driven e.g. by an electrical motor (not shown) and the rotational speed can be adjusted e.g. via a frequency converter (not shown). The drum 10 comprises a plurality of channels whereof only one channel 16 is visible in the cross-sectional view of Fig. 1. The channel extends axially from a first open end 17 to an opposite second open end 18. The drum and housing is formed for simultaneous fluid communication between the first open end 17 and the intake aperture 3 of the first set of apertures and fluid communication between the second open end 18 and the outlet aperture 6 of the second set of apertures in one orientation, i.e. rotational position, of the drum in relation to the housing. In another rotational position of the drum in relation to the housing, the drum and housing is formed for simultaneous fluid communication between the first open end 17 and the outlet aperture 4 of the first set of apertures and fluid communication between the second open end 18 and the intake aperture 5 of the second set of apertures. This alternating arrangement of the open ends in relation to the apertures during rotation of the drum enables communication of the first fluid and second fluid into and out of the channel during rotation of the drum.

A sliding member in the form of a piston 19 is arranged to slide in the channel. The piston is allowed to move towards the first or second end portion under influence of pressures of the first and second fluids. The piston has a first surface 20 influenced by the first fluid and a second surface 21 influenced by the second fluid. Due to a difference in the sizes of the two surfaces 20, 21, a pressure p1 of the first fluid may drive the second fluid out of the channel at a pressure p2, the scale between p1 and p2 being in the order of the scale between the sizes of the surfaces 20, 21.

The disclosed pressure exchanger is suitable for exchanging the pressures of brine and seawater in a RO plant. For that purpose, the apertures of the first set of apertures are connected to a fluid flow line transporting the brine out of the RO chamber at a relatively high pressure and the apertures of the second set of apertures are connected to a fluid flow line transporting seawater into the RO chamber. As shown, the first surface is larger than the second surface. Due to the differences in sizes, the seawater can be brought to the original pressure of the brine, i.e. the pressure of the RO chamber irrespectively that a certain loss must be expected over the pressure exchanger as well as in the fluid flow line transporting the brine out of the chamber.

Fig. 1 further shows that the port plate 22 biasing against the valve plate 24 under influence of at least one helical spring 25. In the disclosed situation, the drum 10 is rotated to an orientation wherein one port of the valve plate 24 is in fluid communication with the outlet 4 of the first set of apertures whereas the intake 3 of the first set of apertures is blocked by a closed part of the valve plate. In use, e.g. in a RO plant, the converter cyclically changes between the following states:
1) Pressure of second fluid is preset by the first fluid. (Cycle time can be set to 0 seconds)
2) Second fluid is pumped out of the outlet by means of the first fluid
3) Pressure of second fluid is preset by the first or second fluid at low pressure. (Cycle time can be set to 0 seconds)
4) First fluid is pumped out of the outlet by means of the second fluid

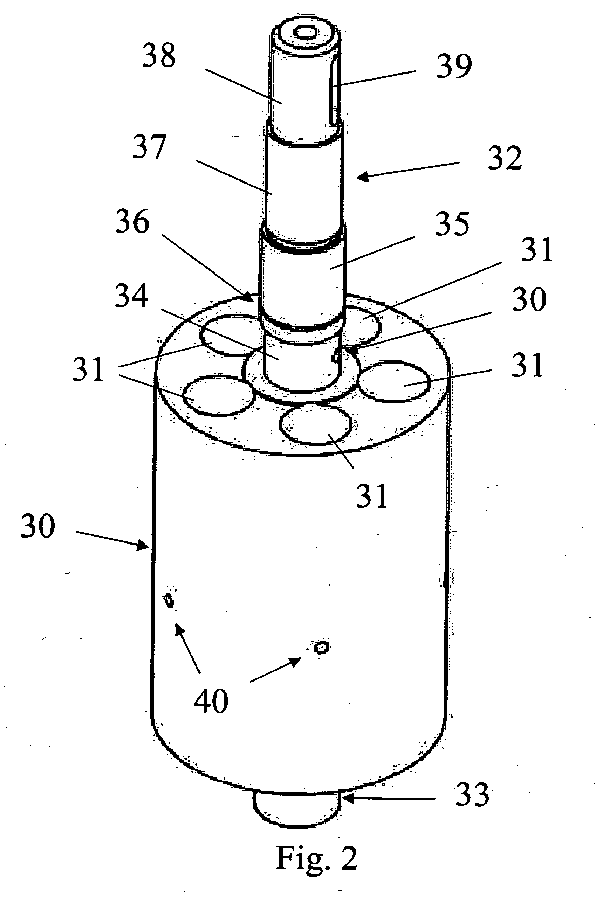

Fig. 2 shows a channel unit 30 with a plurality of channels 31 extending between two open ends formed in the axially disposed end parts of the channel unit. The channel unit has first and second axles 32, 33, for rotational suspension in a housing. A part of the axle has a notch 39 functioning as a seat for a driving stud of a motor, e.g. a regular electrical AC or DC motor for rotating the channel unit. The channels end in openings 40 on the peripheral outer surface of the channel unit and on the axles.

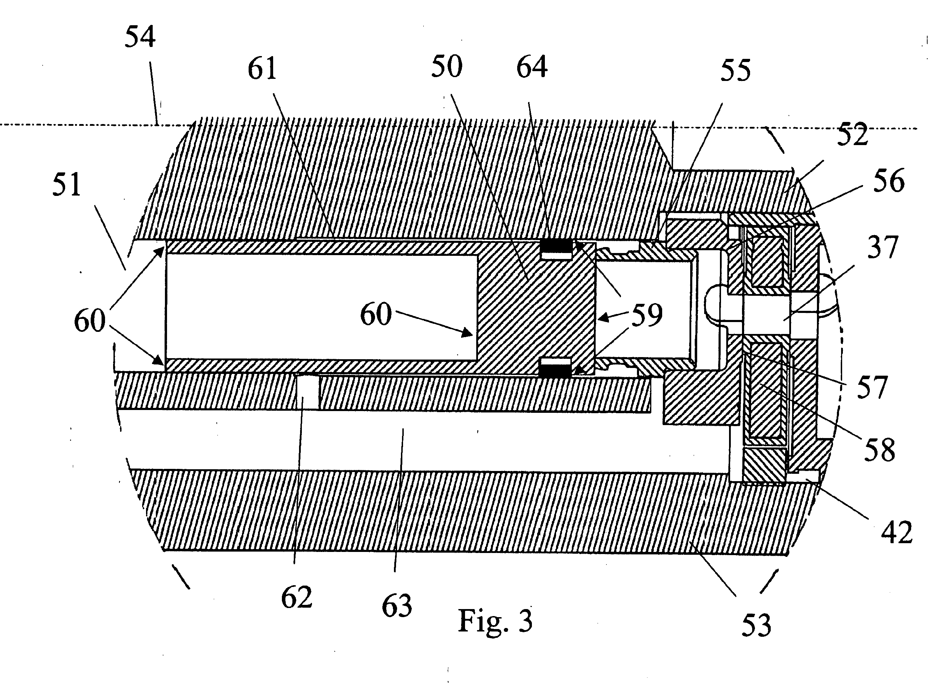

Fig. 3 shows an enlarged view of the pressure exchanger also shown in Fig. 1. In Fig. 3, details of the piston and channel are more clearly seen. The piston 50 is arranged movably in the fluid channel 51 of the channel unit 52. The channel unit is a drum which is suspended in the housing 53 for rotation around an axis 54 of rotation. The connection pad 55 is adapted to couple the valve plate 56 to the channel 51 flexibly and thus to compensate for tolerances in the channel unit and the valve plate, respectively. The connection pad is pressed into fixed engagement with the opening of the valve plate and into the channel. The outer surface 57 of the valve plate 56 abuts the port plate 58 and establishes a liquid tight connection via hydrostatic balancing of the surface area of the two plates. The diameter and thus the sum of the areas of the right side surfaces 59 of the piston is larger than the diameter and thus the sum of the areas of the left side surfaces 60 of the piston. The channel 61 caused by the different diameters of the two sides of the piston is via the bleed orifice 62 in connection with a low pressure lumen 63 defined between the channel unit and the housing. The sealing ring 64 serves for sealing between the outer surface of the piston and the inner surface of the channel.

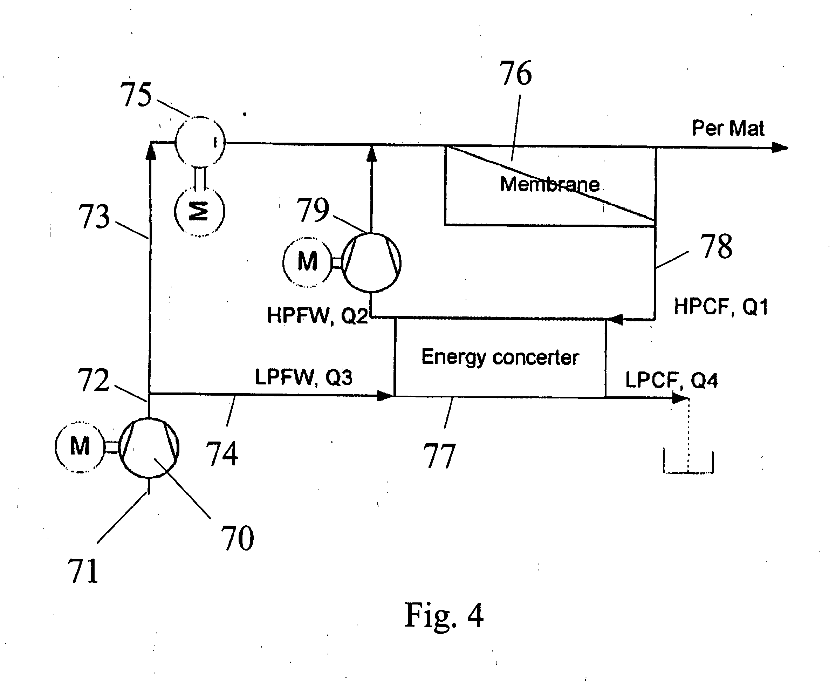

Fig. 4 shows a diagrammatic view of a prior art RO-desalination setup comprising a pressure converter capable of exchanging pressure p1 of one fluid into pressure p2≤p1 of another fluid. The setup comprises a low pressure feed pump 70 pumping seawater from an intake 71 to an intermediate pressure line 72. The intermediate pressure line is split into a first section 73 and a second section 74. The first section feeds a first high pressure pump 75 from which pump the seawater is feed to the membrane 76 at a pressure of 60-70 bar. The seawater of the second section is pressurized via a pressure exchanger 77 operated by the pressure of the brine returned to the sea via a return line 78. The seawater which have been pressurized in the pressure exchanger subsequently enters a second high pressure pump 79 which delivers the seawater to the membrane at pressure of 60-70 bar.

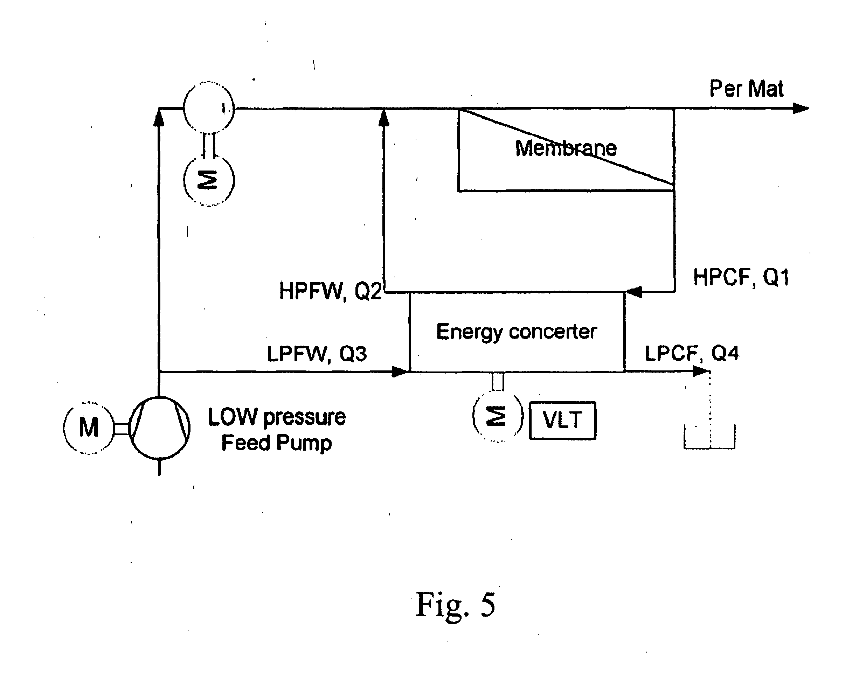

Fig. 5 shows a diagrammatic view of a RO-desalination setup comprising a pressure converter according to the present invention, i.e. capable of exchanging pressure p1 of one fluid into pressure p2≠p1 of another fluid. In this setup, the pressure p1 of the brine is converted into a pressure p2 in the range of 60-70 bar of the seawater, i.e. sufficient for entering the RO chamber directly. The second high pressure pump 79 shown in Fig. 4 can therefore be dispensed with.

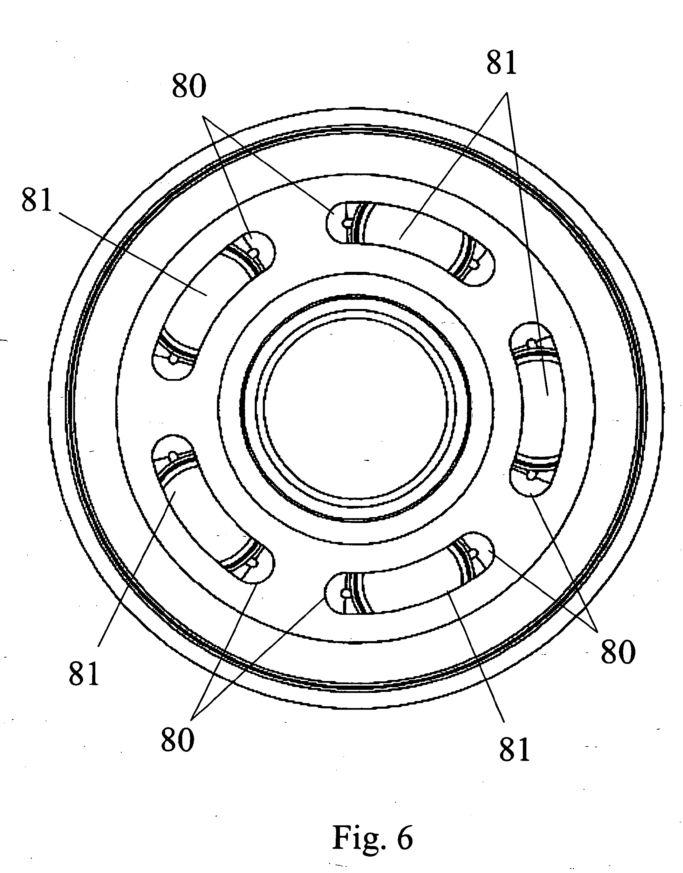

Fig. 6 shows a side-view of a valve plate for a pressure exchanger wherein five apertures 80 of the first set of apertures is seen clearly. Cylindrical channels 81 with a circular cross-sectional shape can be seen through the apertures. The channels are comprised in a channel unit housed in the housing.

## Claims

1. A reverse osmosis desalination system comprising a desalination chamber with an RO membrane (76), an outlet leading a first fluid out of the chamber, an intake leading a second fluid into the chamber, and a pressure exchange (1) for transforming a pressure p1 of the first fluid to a pressure p2 of the second fluid, wherein p2 is a pressure which is higher than p1 and which is sufficient for the reverse osmosis process, the pressure exchanger comprising:
- a housing (2) comprising a first set of apertures comprising at least one intake (3) and at least one outlet aperture (4) for intake and outlet of the first fluid and a second set of apertures comprising at least one intake (5) and at least one outlet aperture (6) for intake and outlet of the second fluid,
- a channel unit (10) arranged in the housing, the channel unit comprising at least one channel (16) extending from a first open end (17) to second open end (18), the open ends being in opposite ends of the channel unit, said open ends of the channel and the apertures of the housing are provided for alternating:
- simultaneous fluid communication between the first open end (17) and the intake aperture (3) of the first set of apertures and fluid communication between the second open end (18) and the outlet aperture (6) of the second set of apertures, and thereafter
- simultaneous fluid communication between the first open end (17) and the outlet aperture (4) of the first set of apertures and fluid communication between the second open end (18) and the intake aperture (5) of the second set of apertures,
for communication of the first and second fluids into and out of the channel (16) during rotation of the unit relative to the first and second sets of apertures, and
- a sliding member (19) movably arranged in the channel (16) between the first open end (17) and the second open end (18), the sliding member comprising a first surface area (20) of at least one surface in contact with the first fluid and a second surface area (21) of at least one surface in contact with the second fluid, the first (20) and second (21) surface areas being of different size,
wherein the channel (16) comprises a first part with a first cross-sectional area in fluid communication with the high pressure fluid and a second part with a second cross-sectional area in fluid communication with the low pressure fluid, the first cross-sectional area being larger than the second cross-sectional area.

2. A system according to claim 1, wherein the channel unit (10) is supported by the housing (2) for rotation around an axis of rotation, said rotation causing cyclically fluid communication between:
- the first open end and the intake aperture of the first set of apertures during a first period of time, and
- between the second open end and the outlet aperture of the second set of apertures during a second period of time, and thereafter
- between the first open end and the outlet aperture of the first set of apertures during a third period of time, and
- between the second open end and the intake aperture of the second set of apertures during a fourth period of time,
during a cycle corresponding to a 360° rotation of the channel unit.

3. A system according to claims 1 or 2, wherein the housing (2) comprises first and second end portions at opposite ends of a body portion, the first set of apertures being defined in the first end portion and the second set of apertures being defined in the second end portion.

4. A system according to claim 3, wherein the channel unit is supported by the first and second end portions.

5. A system according to claims 2-4, wherein the axis of rotation is parallel to a longitudinal axis of the channel.

6. A system according to claims 2-4, wherein the channel extends in a direction substantially radial to the axis of rotation.

7. A system according to any of the preceding claims, wherein channel is shaped as a cylinder and wherein the sliding member comprises at least one piston member arranged in the channel to move back and fourth therein.

8. A system according to any of the preceding claims, wherein the sliding member extends from the first part of the channel and into the second part of the channel.

9. A system according to any of the preceding claims, wherein the sliding member comprises a plurality of separate piston parts.

10. A system according to any of the preceding claims, further comprising power driven means for moving the channel unit in relation to the apertures of the first and second sets of apertures .

11. A system according to claim 10, wherein the power driven means is driven by pressure of one of the first and second fluids.

12. A system according to any of claims 2-11, wherein, for each rotation of the channel unit, the first period of time overlaps the second period of time with 70-99 percent of the cycle time.

13. A system according to any of claims 2-12 wherein for each rotation of the channel unit, the third period of time overlaps the fourth period of time with 70-99 percent of the cycle time.

## Patentansprüche

1. Ein Umkehrosmose-Entsalzungssystem weist eine Entsalzungskammer auf, mit einer RO-Membran (76), einem Auslass, der eine erste Flüssigkeit aus der Kammer leitet, einem Einlass, der eine zweite Flüssigkeit in die Kammer leitet, und einem Druckwandler (1) zur Umwandlung eines Drucks p1 der ersten Flüssigkeit in einen Druck p2 der zweiten Flüssigkeit, wobei der Druck p2 höher als der Druck p1 ist und für den Umkehrosmoseprozess ausreicht, wobei der Druckwandler folgendes aufweist:
- ein Gehäuse (2) mit einem ersten Satz von Öffnungen, der mindestens eine Einlassöffnung (3) und eine Auslassöffnung (4) zum Einlassen und Auslassen der ersten Flüssigkeit aufweist, und mit einem zweiten Satz von Öffnungen, der mindestens eine Einlassöffnung (5) und eine Auslassöffnung (6) zum Einlassen und Auslassen der zweiten Flüssigkeit aufweist
- eine im Gehäuse angeordnete Kanaleinheit mit mindestens einem Kanal 16, der sich von einem ersten offenen Ende (17) zu einem zweiten offenen Ende (18) erstreckt, wobei sich die offenen Enden an gegenüberliegenden Enden der Kanaleinheit befinden, und wobei die offenen Enden des Kanals und die Öffnungen des Gehäuses zur abwechselnden Erzeugung der folgenden Vorgänge vorgesehen sind:
- gleichzeitige Flüssigkeitsverbindung zwischen dem ersten offenen Ende (17) und der Einlassöffnung (3) vom ersten Satz von Öffnungen und Flüssigkeitsverbindung zwischen dem zweiten offenen Ende (18) und der Auslassöffnung (4) vom zweiten Satz von Öffnungen, und danach
- gleichzeitige Flüssigkeitsverbindung zwischen dem ersten offenen Ende (17) und der Auslassöffnung (4) vom ersten Satz von Öffnungen und Flüssigkeitskommunikation zwischen dem zweiten offenen Ende (18) und der Einlassöffnung (5) vom zweiten Satz von Öffnungen
- zur Leitung der ersten und zweiten Flüssigkeiten in die Kanäle (16) hinein und aus den Kanälen (16) hinaus während Drehung der Einheit im Verhältnis zu den ersten und zweiten Sätzen von Öffnungen
- ein im Kanal (16) zwischen dem ersten offenen Ende (17) und dem zweiten offenen Ende (18) beweglich angebrachter Gleitkörper (19), der einen ersten Oberflächenbereich (20) von mindestens einer mit der ersten Flüssigkeit in Kontakt stehender Oberfläche und einen zweiten Oberflächenbereich (21) von mindestens einer mit der zweiten Flüssigkeit in Kontakt stehender Oberfläche aufweist, wobei der erste (20) und zweite (21) Oberflächenbereich unterschiedliche Größen haben,
wobei der Kanal (16) einen ersten Teil mit einem ersten mit der Hochdruckflüssigkeit in Flüssigkeitsverbindung stehenden Querschnittbereich und einen zweiten Teil mit einem zweiten mit der Niederdruckflüssigkeit in Flüssigkeitsverbindung stehenden Querschnittbereich aufweist, und wobei der erste Querschnittbereich grösser als der zweite Querschnittbereich ist.

2. Ein System nach Anspruch 1, wobei die Kanaleinheit (10) zur Drehung um eine Drehachse vom Gehäuse (2) unterstützt wird, und wobei die Drehung während eines Zyklusses, der einer 360° Drehung der Kanaleinheit entspricht, zyklische Flüssigkeitsverbindung zwischen:
- dem ersten offenen Ende und der Einlassöffnung vom ersten Satz von Öffnungen während eines ersten Zeitraumes, und
- dem zweiten offenen Ende und der Auslassöffnung vom ersten Satz von Öffnungen während eines zweiten Zeitraumes, und danach
- zwischen dem ersten offenen Ende und der Auslassöffnung vom ersten Satz von Öffnungen während eines dritten Zeitraumes, und
- zwischen dem zweiten offenen Ende und der Einlassöffnung vom zweiten Satz von Öffnungen während eines vierten Zeitraumes
erzeugt.

3. Ein System nach Anspruch 1 oder 2, wobei das Gehäuse (2) erste und zweite Endstücke an gegenüberliegenden Enden eines Körperstücks aufweist, und wobei der erste Satz von Öffnungen im ersten Endstück und der zweite Satz von Öffnungen im zweiten Endstück definiert sind.

4. Ein System nach Anspruch 3, wobei die Kanaleinheit von den ersten und zweiten Endstücken unterstützt ist.

5. Ein System nach den Ansprüchen 2-4, wobei die Drehachse parallel zur Längsachse des Kanals ist.

6. Ein System nach den Ansprüchen 2-4, wobei sich die Drehachse in eine Richtung erstreckt, die im Wesentlichen radial zur Drehachse ist.

7. Ein System nach jedem der vorhergehenden Ansprüche,
wobei der Kanal zylinderförmig ausgebildet ist, und
wobei der Gleitkörper mindestens einen Kolbenkörper aufweist, der im Kanal hin und her beweglich angeordnet ist.

8. Ein System nach jedem der vorhergehenden Ansprüche,
wobei sich der Gleitkörper von einem ersten Teil des Kanals in einen zweiten Teil des Kanals erstreckt.

9. Ein System nach jedem der vorhergehenden Ansprüche,
wobei der Gleitkörper eine Vielzahl von separaten Kolbenteilen aufweist.

10. Ein System nach jedem der vorhergehenden Ansprüche, das zusätzlich kraftbetriebene Mittel zur Bewegung der Kanaleinheit im Verhältnis zu den Öffnungen des ersten und des zweiten Satzes von Öffnungen aufweist.

11. Ein System nach Anspruch 10, wobei die kraftbetriebenen Mittel durch den Druck der ersten oder der zweiten Flüssigkeit betrieben werden.

12. Ein System nach jedem der Ansprüche 2-11, wobei der erste Zeitraum, für jede Drehung der Kanaleinheit, den zweiten Zeitraum um 70-99 Prozent von der Zykluszeit überlappt.

13. Ein System nach jedem der Ansprüche 2-12, wobei der dritte Zeitraum, für jede Drehung der Kanaleinheit, den vierten Zeitraum um 70-99 Prozent von der Zykluszeit überlappt.

## Revendications

1. Système de dessalement par osmose inverse comprenant une chambre de dessalement dotée d'une membrane RO (76), d'un orifice de sortie permettant à un premier fluide de sortir de la chambre, d'un orifice d'entrée permettant à un second fluide d'entrer dans la chambre et un échangeur de pression (1) pour transformer une pression p1 du premier fluide en une pression p2 du second fluide, dans lequel p2 correspond à une pression qui est plus élevée que p1 et qui est suffisante pour le processus d'osmose inverse, l'échangeur de pression comprenant :
- un logement (2) comprenant un premier ensemble d'ouvertures comprenant au moins une entrée (3) et au moins une ouverture de sortie (4) pour l'entrée et la sortie du premier fluide et un second ensemble d'ouvertures comprenant au moins une entrée (5) et au moins une ouverture de sortie (6) pour l'entrée et la sortie du second fluide,
- une unité de canal (10) disposée dans le logement, l'unité de canal comprenant au moins un canal (16) s'étendant depuis une première extrémité ouverte (17) vers une seconde extrémité ouverte (18), les extrémités ouvertes étant aux extrémités opposées de l'unité de canal, lesdites extrémités ouvertes du canal et les ouvertures du logement sont prévues pour faire alterner :
- une communication fluidique simultanée entre la première extrémité ouverte (17) et l'ouverture d'entrée (3) du premier ensemble d'ouvertures et la communication fluidique entre la seconde extrémité ouverte (18) et l'ouverture de sortie (6) du second ensemble d'ouvertures et ensuite
- une communication fluidique simultanée entre la première extrémité ouverte (7) et l'ouverture de sortie (4) du premier ensemble d'ouvertures et la communication fluidique entre la seconde extrémité ouverte (18) et l'ouverture d'entrée (5) du second ensemble d'ouvertures,
pour faire communiquer des premier et second fluides dans et en dehors du canal (16) pendant la rotation de l'unité relativement aux premier et second ensembles d'ouvertures, et
- un élément coulissant (19) disposé de façon mobile dans le canal (16) entre la première extrémité ouverte (17) et la seconde extrémité ouverte (18), l'élément coulissant comprenant une première surface (20) d'au moins une surface en contact avec le premier fluide et une seconde surface (21) d'au moins une surface en contact avec le second fluide, les première (20) et seconde (21) surfaces étant de taille différente,
dans lequel le canal (16) comprend une première partie ayant une première surface transversale en communication fluidique avec le fluide à haute pression et une seconde partie ayant une seconde surface transversale en communication fluidique avec le fluide à basse pression, la première surface transversale étant supérieure à la seconde surface transversale.

2. Système selon la revendication 1, dans lequel l'unité de canal (10) est soutenue par le logement (2) pour rotation autour d'un axe de rotation, ladite rotation entraînant une communication fluidique cyclique entre :
- la première extrémité ouverte et l'ouverture d'entrée du premier ensemble d'ouvertures pendant une première période de temps, et
- entre la seconde extrémité ouverte et l'ouverture de sortie du second ensemble d'ouvertures pendant une deuxième période de temps, et ensuite
- entre la première extrémité ouverte et l'ouverture de sortie du premier ensemble d'ouvertures pendant une troisième période de temps, et
- entre la seconde extrémité ouverte et l'ouverture d'entrée du second ensemble d'ouvertures pendant une quatrième période de temps,
pendant un cycle correspondant à une rotation de 360° de l'unité de canal.

3. Système selon les revendications 1 ou 2, dans lequel le logement (2) comprend une première et une seconde parties d'extrémité aux extrémités opposées d'une partie de corps, le premier ensemble d'ouvertures étant défini dans la première partie d'extrémité et le second ensemble d'ouvertures étant défini dans la seconde partie d'extrémité.

4. Système selon la revendication 3, dans lequel l'unité de canal est soutenue par les première et seconde parties d'extrémité.

5. Système selon la revendication 2 à 4, dans lequel l'axe de rotation est parallèle à un axe longitudinal du canal.

6. Système selon la revendication 2 à 4, dans lequel le canal s'étend dans un sens essentiellement radial par rapport à l'axe de rotation.

7. Système selon l'une quelconque des revendications précédentes, dans lequel le canal est formé en forme de cylindre et dans lequel l'élément coulissant comprend au moins un élément de piston disposé dans le canal pour effectuer un mouvement de va-et-vient à l'intérieur de celui-ci.

8. Système selon l'une quelconque des revendications précédentes, dans lequel l'élément coulissant s'étend depuis la première partie du canal et dans la seconde partie du canal.

9. Système selon l'une quelconque des revendications précédentes, dans lequel l'élément coulissant comprend une pluralité de parties de piston séparées.

10. Système selon l'une quelconque des revendications précédentes, comprenant en outre un moyen à entraînement mécanique pour déplacer l'unité de canal par rapport aux ouvertures des premier et second ensembles d'ouvertures.

11. Système selon la revendication 10, dans lequel le moyen à entraînement mécanique est entraîné par la pression de l'un des premier et second fluides.

12. Système selon l'une quelconque des revendications 2 à 11, dans lequel pour chaque rotation de l'unité de canal, la première période de temps empiète sur la deuxième période de temps de 70 à 99 pour cent du cycle de temps.

13. Système selon l'une quelconque des revendications 2 à 12 dans lequel pour chaque rotation de l'unité de canal, la troisième période de temps empiète sur la quatrième période de temps de 70 à 99 pour cent du cycle de temps.
